# EUROPEAN PATENT SPECIFICATION

(11) **EP 4 435 762 B1**
(45) Date of publication and mention of the grant of the patent: **22.10.2025**
(21) Application number: 23461538.3
(22) Date of filing: 23.03.2023
(51) Int. Cl.: A63F 13/235, A63F 13/245, A63F 13/803, A63F 13/98, G09B 9/05

(54) **ELECTRONICALLY CONTROLLED AUTOMATED CAR GAME SIMULATOR**
ELEKTRONISCH GESTEUERTER AUTOMATISCHER SIMULATOR FÜR AUTOSPIELE
SIMULATEUR DE JEU DE VOITURE AUTOMATISÉ À COMMANDE ÉLECTRONIQUE

(43) Date of publication of application: 25.09.2024
(73) Proprietor: Uniwersytet Zielonogórski, 65-417 Zielona Góra (PL)
(72) Inventor: Leksycki, Kamil, 67-100 Nowa Sól (PL); Regula, Rafal, 65-119 Zielona Góra (PL)
(74) Representative: JD&P Patent Attorneys Joanna Dargiewicz & Partners

(56) References cited:
- WO-A1-2008/133953
- WO-A1-2018/054930

## Description

The subject of the invention is an electronically controlled automated car game simulator, using an office chair with a 5-arm base or a racing chair. A simulator according to the invention provides stable fixtures for a steering wheel, a shifter and pedals, as well as the use of a standard office chair with a 5-arm base or a typical racing chair. The structure of a frame of a car game simulator has been designed such that it ensures wireless adjustment of it settings in several directions and dimensional ranges (according to the preferences of the driver, in order to ensure convenient and comfortable body position while driving a car), as well as the option to store such settings. The driver can recall the stored positions at any time, and their setting is automatic.

### Prior art

WO2013006997 A1 discloses a Play Station frame for a car racing video game, comprising a front underframe and a rear underframe. The front underframe is connected to a steering wheel lower supporting frame upwards, the lower supporting frame is connected to a cross rod, a steering wheel frame is mounted on the cross rod, and a barrel for mounting a gear position indicator supporting frame is welded on the steering wheel lower supporting frame. A pedal branch tube is mounted in front of the front underframe, and a pedal frame is riveted on the front underframe. The pedal branch tube and the pedal frame are directly connected to an adjustment frame, and the angle of the adjustment frame may be changed by adjusting the position of the pedal branch tube in the front and rear direction, thereby changing the angle of the pedal frame. A connection tube of the front and rear underframes is connected at the back of the front underframe. A seat supporting beam is mounted on the rear underframe. In the Play Station frame for a car racing video game, gaps between and positions of some parts can be adjusted for adapting to operation of players with different figures and habits. The play station frame is convenient in disassembling, assembling, storing, packaging, and transporting.

Similar solutions are disclosed in CN202289425U and CN202289428U documents.

On the other hand document US2022087435A1 discloses a seat, particularly for video games, includes a collapsible frame which carries a seat surface and a backrest. The frame includes a first part carrying the backrest and a second part configured to carry a console for a steering wheel or joystick for controlling a video game. These parts are connected pivotally to each other by a hinge.

The hinge includes a first load-bearing body on which the first frame part is mounted, and a second load-bearing body on which the second frame part is mounted. The hinge has locking means for fixating the first and second frame parts in a desired position relative to each other. A hinge for application in such a seat is disclosed as well.

The utility model CN203060800U discloses a game station system is driven in emulation, it is in to feel drive analog system, seat system and fixed connection including the chassis support frame, the vehicle body that set gradually from bottom to top steering wheel controlling means, throttle analogue means, separation and reunion analogue means, brake analogue means, gear action bars device, main frame, control box and display screen in the seat system, the utility model provides a pair of game station system is driven in emulation have all many -sided technological advantages, so good market prospect and economic benefits will be brought to it.

The utility model CN205850202 relates to a simulator of a video game. The simulator of the video game comprises a bottom mounting base, a simulator body and a simulated motion device. The simulated motion device comprises driving motors, double-end universal connecting axles, a hinged H-shaped connecting frame, an A-shaped support which is connected with the hinged H-shaped connecting frame in a hinged mode, a universal balancing shaft connector which is installed in the center of the simulator body and elastic buffering supports which are controlled by oil pressure and are connected on two sides of the rear end of the simulator body. The two double-end universal connecting axles are driven by the driving motors, and are installed on two sides of the front end of the simulator body. A universal plane bearing is installed on the A-shaped support. The universal plane bearing is connected in the middle of the front end of the simulator body. Due to the fact that the driving motors are installed at the front end of the bottom mounting base, drive of the simulator of the video game has the longest shaft connection moment, and output power of the driving motors is abundant. The universal plane bearing arranged on the A-shaped support is capable of ensuring that a vehicle frame can swing left and right when the vehicle frame swings forward and back, and the simulator of the video game of a video game simulator platform is good in third dimension.

The document ES2246664A1 discloses that a support has an H-shaped horizontal tubular structure provided with a vertical sustainer. A top part of the sustainer is mounted with an adjustable base skylight. A driving element is supported on a front part of the tubular structure. An inferior base of the tubular structure is provided with an articulated hinging unit. A supportive element adjusts height and angle of a front part of pedals. A coupling unit is provided with an appropriate optional seat.

Finally, WO2018/054930 A1 provides a computer game controller stand, comprising: a frame, a controller support, connected to the frame, said controller support being configured to support at least one computer game controller, such as a steering wheel module, a joystick module or a pedal module, and a chair connector, configured for preventing horizontal relative movement between the frame and a chair. According to this disclosure the chair connector is adapted to allow the frame and the chair to pivot relative each other about a vertical axis. The disclosure also provides a computer gaming unit and a method of making such a computer gaming unit.

While some of the solutions known in the field ensure the removal and the ability to field the station, they do not enable quick, simple and stable connection of an own office chair with such a station and the automatic control of chair settings in relation to other elements of the station. Such solutions also do not provide the ability to quickly fold the station to compact dimensions or the option of wireless adjustment of station frame settings in several directions and dimensions (according to the preferences of the driver, and thus to ensure convenient and comfortable body position while driving), including the option to store such settings.

Thus, the purpose of the invention was to develop a car game simulator, controlled electronically and which can be connected with a standard office chair or a racing chair. The simulator shall also be characterised by wireless adjustment of its settings in several directions and dimensions, as well as the ability to store such settings.

This objective has been achieved through the car game simulator according to this invention.

### Summary of the invention

Thus, the subject of the invention is an automated car game simulator containing:
- a steering wheel fixing base (1) with a control panel (26) and a pedal fixing base (2), connected together by a frame including the top frame (3), the bottom frame (4) and the bottom frame profile (5);
- height adjustment profile (6);
- two flattened pipes (7) attached to the top frame (3), wherein the first stationary flattened pipe (7) is fixed, while the second mobile flattened pipe (7) is connected detachably, using longitudinal openings provided in the top frame (3), and the steering wheel fixing base (1) is attached on the second flattened pipe, and both flattened pipes (7), the first fixed and the second mobile pipes are connected by two no. 1 cylinders (21) using cylinder fixtures (19), thanks to which motion of the cylinder (21) ensures mobility of the steering wheel fixing base (1) within the length of the longitudinal openings;
   wherein the top frame (3) is partially inserted into the closed height adjustment profile (6), while the bottom frame (4) is connected to the closed height adjustment profile (6);
- two flattened pipes (8), bottom and top pipe, wherein the bottom flattened pipe (8) is installed on the closed height adjustment profile (6), and the top flattened pipe (8) is installed on the top frame (1) and two no. 2 cylinders (22) are installed to both flattened pipes (8), the bottom and the top pipe, using cylinder fixtures (19), wherein motions of no. 2 cylinders (22) ensure mobility and thus partial protrusion of the top frame (3) from the closed height adjustment profile (6), ensuring height adjustment of the steering wheel fixing base (1);
- a distance adjustment bar (9) adjusting the distance of the chair from the pedal fixing base (2), wherein the distance adjustment bar (9) is provided with a through opening, through which the third flattened pipe (7) is inserted, which is installed on both sides on the bottom frame profile (5), wherein the pedal fixing base (2) is installed on the third flattened pipe (7), and a bar rotation lock (14) is inserted into the space between the distance adjustment bar (9) and the third flattened pipe (7), at the flattening, which enables the fixing of any raid pedals and angle adjustment;
   wherein the bottom frame (4) and the pedal fixing base (2) are connected through the fourth flattened pipe (7), to which the pedal fixing base (2) is attached at one side, and the bottom frame (4) on the other side, using longitudinal openings which ensure adjustment of the pedal fixing base (2), wherein bottom parts of two no. 3 cylinders (23) are attached to the fourth flattened pipe (7) using a cylinder fixture (20), while the top parts of no. 3 cylinders (23) are attached using a cylinder fixture (19) to the bottom flattened pipe (8) attached to the closed height adjustment profiles (6) and motions of the cylinders enable the angle adjustment of the pedal fixing base (2),
   wherein the chair fixing base profile (10, 33) is inserted into the distance adjustment bar (9) and both said elements are connected to a no. 4 cylinder (24) and the motion of the no. 4 cylinder (24) causes extension or retraction of the chair fixing base profile (10, 33) from or to the distance adjustment bar (9) and thus adjustment of the distance between the chair and the steering wheel and the pedals;
- a control system, in which
- a radio receiver is connected to an AC/DC converter and to direction controllers 1-4, wherein the direction controller 1 is connected to 1/1 and 1/2 motors which are responsible for the setting the steering wheel position, the direction controller 2 is connected to 2/1 and 2/2 motors, which are responsible for the height of the steering wheel fixing base, the direction controller 3 is connected to motors 3/1 and 3/2, which are responsible for setting the pedal fixing base angle, while the direction controller 4 is connected to the 4/1 motor, responsible for chair protrusion in relation to the steering wheel and the pedals;
- the radio receiver is connected to a battery providing power supply, whether switching on/off is possible thanks to the switch S1, the radio receiver is then connected to switches S2-S13, wherein switches S2 and S3 enable, respectively, extension and retraction of the steering wheel fixing base adjustment cylinders, the S4 and S5 switches enable, respectively, lifting and lowering the steering wheel fixing base adjustment cylinders, the S6 and S7 enable, respectively, lifting and lowering the pedal fixing base adjustment cylinders, the S8 and S9 switches enable, respectively, increasing and decreasing the distance of chair adjustment cylinders in relation to the steering wheel and the pedals, while the S10-S13 switches enable the frame position set using switches S2-S9 to be stored, as well as enable such positions to be loaded and set automatically by the cylinders, wherein
- the radio receiver and the radio transmitter are connected using wireless communication.

The chair fixing base profile (10) is preferably attached, in a detachable manner, to the chair base fixing element (11), wherein the chair base fixing element (11) has three arms, the first of which is attached in a detachable manner to the chair fixing base profile (10), while the other two arms are offset against the first arm by the angle of 144°, such that the offset second and third arms form an angle of 72°,
each of the three arms has one longitudinal opening, through which the pole locking the chair base (12) is attached, and which enables the adjustment of poles locking the chair base (12) within the length of the longitudinal openings and such a placement of poles (12), which makes it possible to place and attach a 5-arm base of a standard office chair,
wherein motion of the chair fixing base profile (10) is possible thanks to three circles of the chair base fixing element (29), which are installed at the bottom in the chair base fixing element (11).

The chair fixing base profile (33) of a racing chair is preferably attached in a detachable manner to the welded base of a racing chair (31), which is provided at the bottom with at least three wheels of the racing chair fixing base (32), enabling motion of the welded base of a racing chair (31).

The direction controllers 1-4 are preferably provided with terminal sensor inputs and motor overload measurement sensors which ensure that the motors are stopped at their terminal position and during an overload and protect the motors against damage

### Brief description of the figures

The subject of the invention is presented in the figures, where
Fig. 1a and 1b present isometric views of an automated car game simulator with a base intended for installation of a standard office chair with a 5-arm base;
Fig. 2a and 2b present isometric views of an automated car game simulator with a base intended for installation of a typical racing chair;
Fig. 3a and 3b present the direction and dimensional ranges of the settings of an automated car game simulator;
Fig. 4 presents the views of a simulator with a base fixing a standard office chair with a 5-arm base after folding, including the dimensions;
Fig. 5 presents the functional diagram for the control of car game simulator settings;
Fig. 6 presents an expanded view of the top part of the simulator according to the invention;
Fig. 7a and 7b present an expanded view of the office chair fixing base;
Fig. 8a and 8b present a top view and a perspective view of the office chair fixing base;
Fig. 9a and 9b present an expanded view of the fixing base intended for a welded racing chair base;
Fig. 10a and 10b present an example control panel and its fixing options.

### Detailed description of the invention

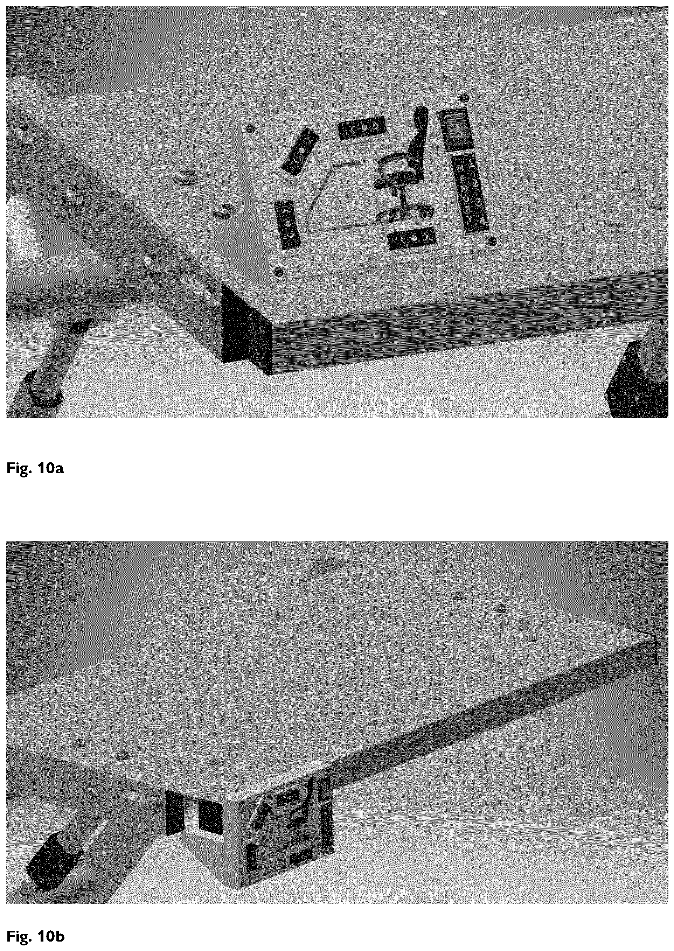

The invention is related to an automated car game simulator with implemented tools enabling wireless control of its settings. The main task of the simulator is to provide stable fixtures for a steering wheel, a shifter and pedals, as well as the of a standard office chair with a 5-arm base or a typical racing chair. Thus, the solution is available in two variants. In addition to the ability to install the typical equipment (steering wheel, shifter, pedal) used by the player while driving, the base fixing a standard office chair with a 5-arm base can be replaced with a base intended for installation of a typical racing chair. The automated game simulator enables wireless control of frame setting changes in several directions and dimensional ranges and adaptation of such settings to the preferences of the driver, and thus to ensure convenient and comfortable body position while driving a car. The preferences of the driver, and thus the frame settings, may be stored in the control system memory and automatically restored after recalling them (Fig. 10a and 10b).

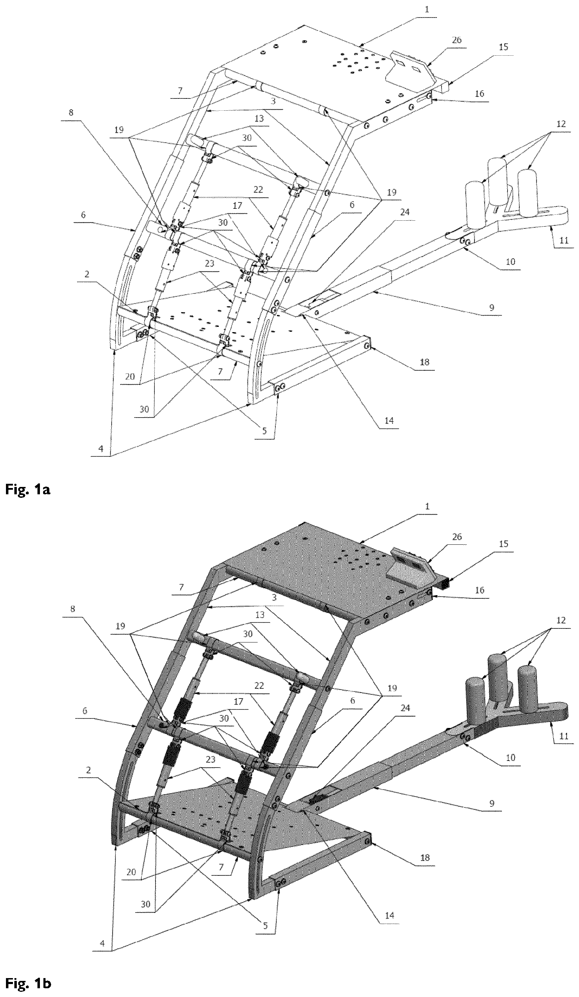

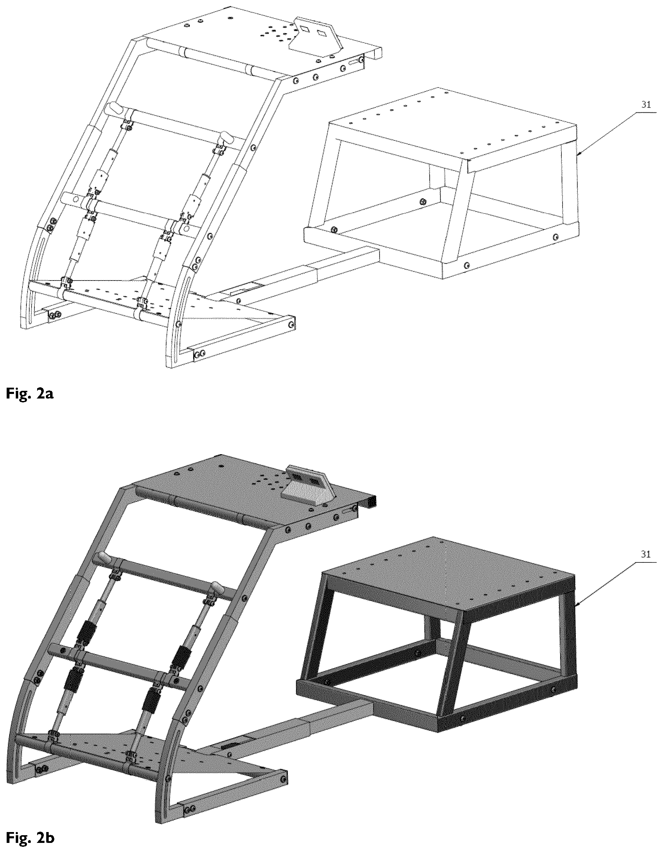

Isometric views of the automated car game simulator with a base intended for fixing a standard 5-arm office chair and a base intended for fixing a typical racing chair are presented in Fig. 1a-b and Fig. 2a-b.

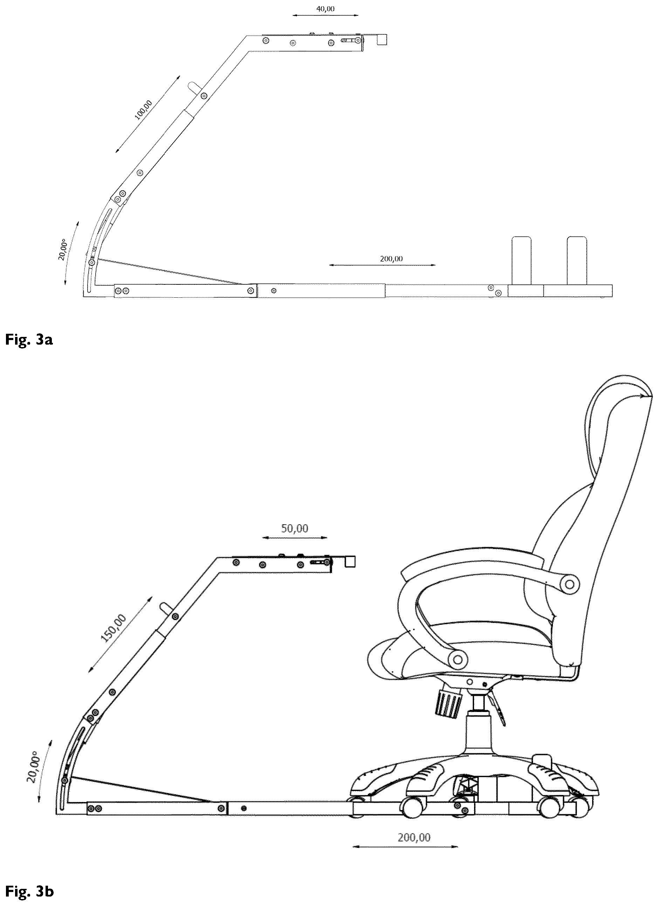

The design of the car game simulator involves several non-standard solutions combining the fields of mechanical and electronic engineering. A range of important assumptions aimed at the following areas has been taken into account when designing the automated car game simulator:
**1. Functionality.** It includes the ability of wireless control over the frame settings in several directions and various dimensional ranges, enabling the player to set the simulator settings to own preferences and thus ensuring convenient and comfortable body position behind the steering wheel while driving a car. The directions and dimensional ranges of settings of the automated car game simulator are shown in Fig. 3a, 3b, 10a and 10b, wherein Fig. 3b also shows the simulator with an installed 5-arm office chair. They are identical, regardless of the type of the base.

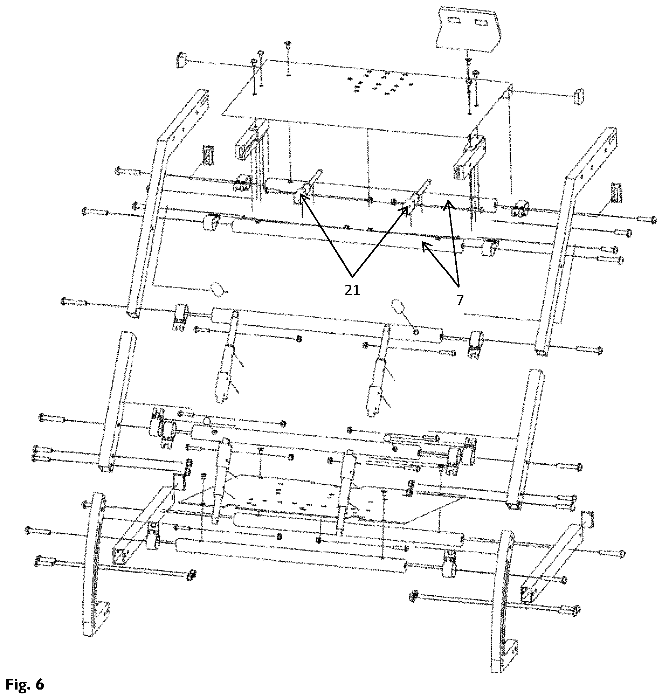

Ensuring the functionality of simulator use applies to the following design elements:
**A) Steering wheel fixing base.** It enables stable attachment of any racing steering wheel and a shifter and enables the adjustment of steering wheel distance over a range of 40 mm.
   The solution uses two flattened pipes (7), bolted to the top frame (3). The first (fixed) pipe is permanently fixed, while the second (mobile) pipe has been attached using longitudinal openings provided in the top frame (3). The steering wheel fixing base (1) is attached to the second flattened pipe (7). Both flattened pipes are connected using no. 1 cylinders (21) using cylinder fixture (19) (Fig. 6). The motion of the cylinder ensures the mobility of the steering wheel fixing base (1) in the range of 40 mm, and thus within the length of the longitudinal openings.
**B) Top and bottom frame, including the height adjustment profile.** The elements enable steering wheel fixture base (1) to have its height adjusted within the range of 100 mm.
   The solution used enables frame adjustment between 645 mm and 720, and thus within the range of its height of 100 mm. The solution uses the top frame (3), which is partially inserted into the closed height adjustment profile (6), as well as the the bottom frame (4), which is bolted to the closed height adjustment profile (6). The solution uses flattened pipes (8). The bottom pipe is bolted to the closed height adjustment profile (6) and the top pipe to the top frame (1). Two no. 2 cylinders (22) are attached to the flattened pipes (8) using a cylinder fixture (19). Cylinder motions ensure mobility, and thus partial protraction of the top frame (3) from the closed height adjustment profile (6), within a length range of 100 mm.
**C) Pedal fixing base.** It enables any racing pedals to be attached and the angle adjustment between 0 and 20 degrees. This part of the design generally uses two solutions:
   **The first solution.** It involves the connection of the distance adjustment bar (9), the pedal fixing base (2) including the flattened pipe (7) and bottom frame profiles (5). The distance adjustment bars (9) are provided with a through opening, through which the flattened pipe (7) is slid and attached to the bottom frame profiles (5) on both sides using bolts. The pedal fixing base (2) is attached to the flattened pipe using bolts. The bar rotation lock (14) is inserted at the flattening location to fill the space between the distance adjustment bar (9) and the flattened pipe (7) (Fig. 1a and 1b).
   **The second solution.** It involves the connection between the bottom frame (4) and the pedal fixing base (2) using a flattened pipe (7). The pedal fixing base (2) is screwed to the flattened pipe (7) using bolts. The flattened pipe (7) was screwed using bolts passing through the longitudinal openings designed in the bottom frame (4). The longitudinal openings have the height of 210 mm and are spaced along the R420 radius, enabling adjustment of the pedal fixing base (2). The bottom parts of two no. 3 cylinders (23) are attached to the flattened pipe (7) using a cylinder fixture (20). The top part of no. 3 cylinders (23) has been attached to the flattened pipe (8) using a cylinder fixture (19) attached to the closed height adjustment profiles (6). Motion of the cylinders enables the adjustment of the pedal fixing base (2) within the range between 0 and 20 degrees (Fig. 1a and 1b).
**D) Distance adjustment bar and chair fixing base profile.** The elements are designed and connected such that they enable the change of chair distance from the steering wheel and pedals within the range of 200 mm.

The chair fixing base profile (10) with open, rectangular cross-section (42 x 46 mm) has been inserted into the distance adjustment bar (9) with a closed rectangular cross-section (46 x 50 mm). Both elements are connected to the no. 4 cylinder (24) using bolts. Motion of the no. 4 cylinder (24) results in the chair fixing base profile (10) being retracted into or extended from the distance adjustment bar (9), and thus in adjustment of the chair distance in relation to the steering wheel and the pedals within the range of 200 mm (Fig, 7a, 7b, 8a and 8b).

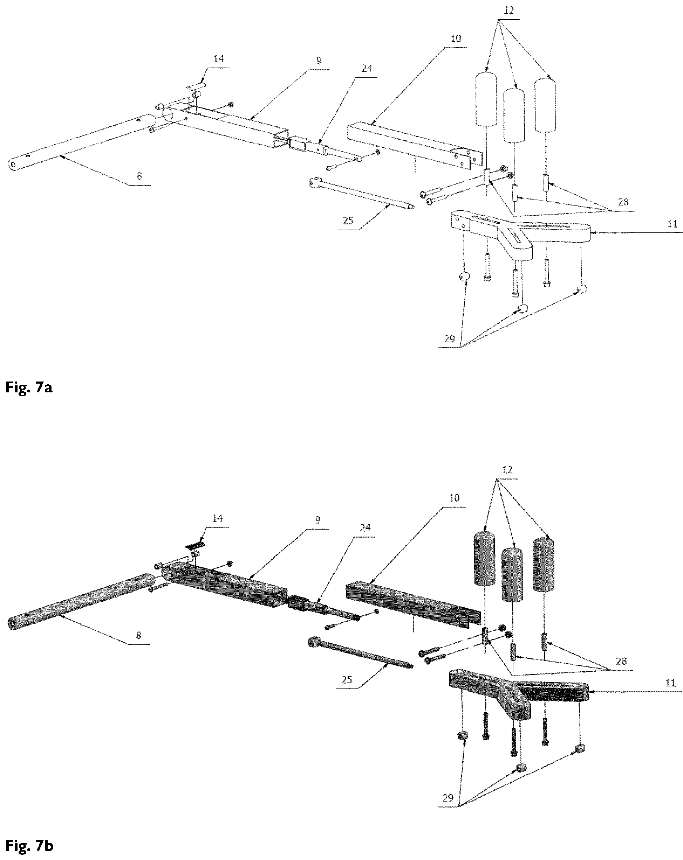

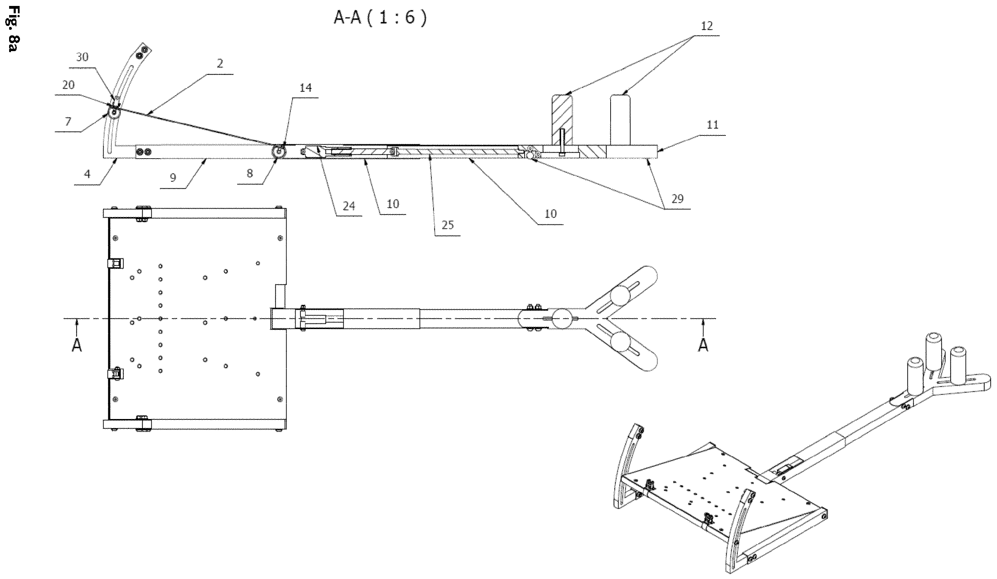

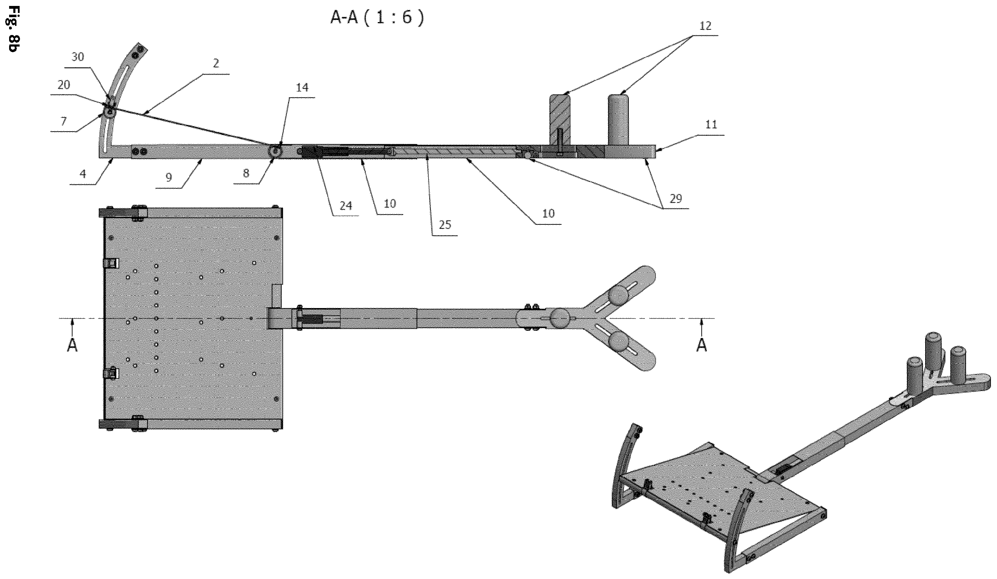

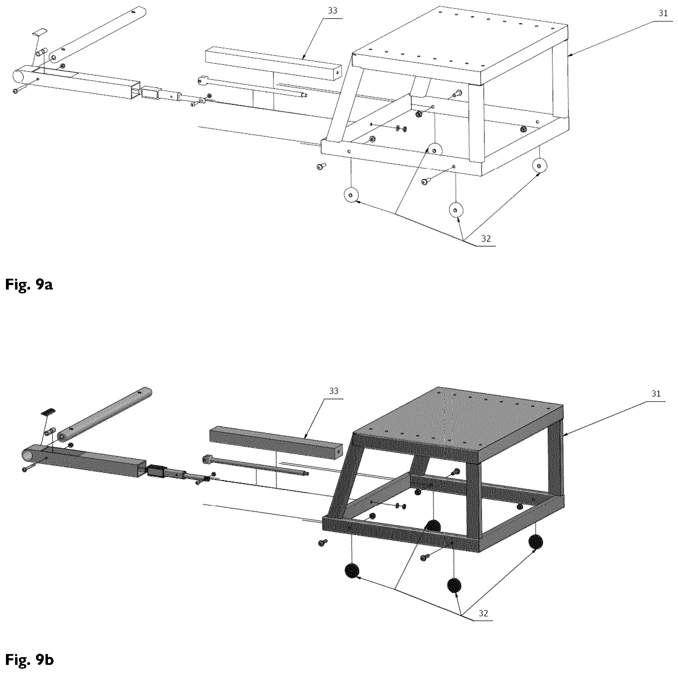

The motion of the chair fixing base in the variant with the base fixing a standard office chair with a 5-arm base is possible thanks to the three wheels of the chair base fixing element (29), which are installed at the bottom in the chair base fixing element (11) (Fig. 7a, 7b, 8a and 8b). On the other hand, in the variant with the welded racing chair base (31), this motion is possible thanks to the four wheels of the racing chair base (32), which are installed at the bottom of this structure (Fig. 9a and 9b).

### 2. Variants. The use of the adequately designed distance adjustment bar, to which the following items can be connected:

**A) Chair fixing base profile, chair base fixing element, including poles locking the chair base (****Fig. 1a and 1b****).** The solution was designed such that it enables quick and simple installation of a standard office chair with a 5-arm base.
   The chair fixing base profile (10) is bolted to the chair base fixing element (11) using two bolts. The design of the chair base fixing element (11) includes three arms. The first arm is bolted to the chair fixing base profile (10), while the other two arms are offset against the first arm by an angle of 144°. The offset arms are separated at an angle of 72°. A single, 120 mm-long longitudinal opening has been designed in all three arms. A pole locking the chair base (12) is bolted through each of the longitudinal openings, using fixing bolts. Loosening the screws enables adjustment of the poles locking the chair base (12) within the length of the longitudinal openings. This adjustment allows the poles to be placed such that it is possible to place and fix the 5-arm base of a standard office chair.
**B) Welded racing chair base (****Fig. 2a and 2b****).** The solution was designed such that it enables a typical racing chair attachment.

The welded racing chair base (31) has the dimensions of 880 x 500 x 302 mm (the dimensions are, respectively: length x width x height) and has been designed such that it guarantees comfortable position during the use of the simulator. The top part of the base intended for racing chair (31) installation has the dimensions of 400 x 500 mm (length x width) and enables the installation of almost any typical racing chair available on the market.

Both variants use identical open cross-sections of rectangular profiles of the chair fixing base, with the dimensions of 42 x 46 mm. The use of identical profile cross-sections in both variants allows them to be extended or retracted into the distance adjustment bar (9) with cross-section dimensions of 46 x 50 mm. In both variants, the cylinder (24) has to be removed when replacing the base and then re-assemble it with the newly installed base. Easy access to the cylinder (24) is possible thanks to the rectangular opening provided in the distance adjustment bar (9), as well as the open rectangular profile of the chair fixing base (31).

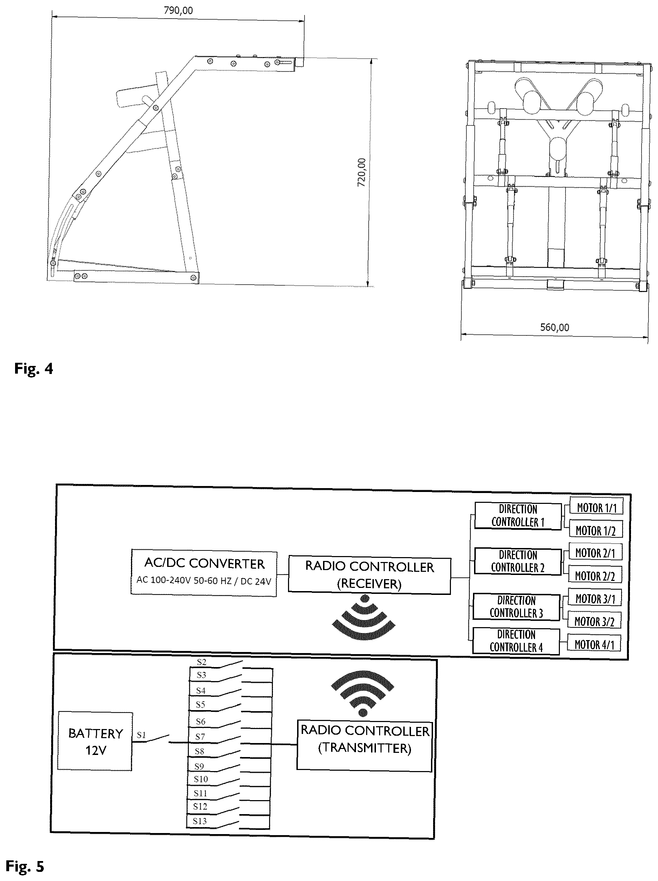

3. Use. It includes the option of quick and easy folding and unfolding the gaming frame, optionally with a base fixing a standard office chair with a 5-arm base, Fig. 4. The option with a position for fixing a racing chair requires this design element to be removed.

The designed solution enables folding parts of the frame and achieving a decrease in its length, from 1360 mm to 790 mm. A flattened pipe (8) passes through the 18 mm diameter opening provided in the distance adjustment bar (9). The flattened pipe (8) enables rotation of the distance adjustment bar (9), which in turn enables folding the elements of the distance adjustment bar (9), the chair fixing base profile (10), the chair base fixing element (11) and the poles locking the chair base (12).

**4. Automation and control.** It includes the ability of simple and automatic setting of the position of the car game simulator using cylinders and devices controlling the cylinders. The frame structure has been designed to ensure wireless and easy adjustment of settings in several directions and dimensional ranges, and thus to allow the driver to assume a convenient and comfortable position behind the wheel while driving a car. The set positions may be stored and recalled, and their settings are implemented automatically by the cylinders and the control system.

The design of the simulator has been created such that it ensures:
A) Adjustment of the steering wheel distance in the range of 40 mm.
B) Adjustment of the steering wheel fixing base height within the length range of 100 mm.
C) Adjustment of the pedal fixing base angle setting within the range between 0 and 20 degrees.
D) Adjustment of the change between the chair and the steering wheel and the pedals, within the range of 200 mm.

The adjustment of these structural elements is possible thanks to the use of 7 cylinders. Two no. 1 cylinders (21) enable adjustment of the steering wheel distance in the range of 40 mm, two no. 2 cylinders (22) enable adjustment of the steering wheel fixing base height in the length range of 100 mm, two no. 3 cylinders (23) enable adjustment of the pedal fixing base angle in the range between 0 and 20 degrees, and one no. 4 cylinder (24) enables the adjustment of the distance between the chair and the steering wheel and the pedal in the range of 200 mm.

The functional diagram of the settings of the car game simulator is shown in Fig. 5.

The radio controller (receiver) is connected to an AC/DC converter and to direction controllers 1-4. The direction controller 1 is connected to motors 1/1 and 1/2, responsible for setting the position of the steering wheel. The direction controller 2 is connected to motors 2/1 and 2/2, responsible for setting the steering wheel fixing base height. The direction controller 3 is connected to motors 3/1 and 3/2, responsible for setting the pedal fixing base angle. The direction controller 4 is connected to the motor 4/1, responsible for moving the chair relative to the steering wheel and the pedals.

The direction controllers 1-4 record motor position data, and thus the steering wheel distance setting in the length range of 40 mm (direction controller 1), steering wheel fixing base height setting in the length range of 100 mm (direction controller 2), the pedal fixing angle setting in the range between 0 and 20 degrees (direction controller 3), as well as the chair position in relation to the steering wheel and the pedals, in a 200 mm range (direction controller 4).

The radio controller (transmitter) is connected to a batter responsible for its power supply. The power supply can be switched on/off thanks to the normally open binary switch S1. The radio controller (transmitter) is also connected to normally open, monostable switches S2-S13. The switches S2 and S3 enable, respectively, extension and retraction of the steering wheel fixing base adjustment cylinders, S4 and S5 enable, respectively, lifting and lowering the cylinders adjusting the steering wheel fixing base height, S6 and S7 enable, respectively, lifting and lowering the cylinders adjusting the pedal fixing base, S8 and S9 enable, respectively, moving the adjustment cylinders adjusting the chair in relation to the steering wheel and the pedals forwards and backwards. The S10-S13 switches enable the frame position set using the S2-S9 switches to be stored, as well as such positions to be recalled and automatically set by the cylinders.

The radio controller (receiver) and the radio controller (transmitter) are connected via a wireless connection.

Direction controllers 1-4 shall be provided with inputs from terminal sensors and motor overload measurement sensors. The use of terminal sensors enables motors to be stopped once they reach their end position. Motor overload measurements are going to stop the motors upon overload and protect the motors against damage.

### List of elements

1 steering wheel fixing base
2 pedal fixing base
3 top frame
4 bottom frame
5 bottom frame profile
6 height adjustment profile
7 flattened pipe 1
8 flattened pipe 2
9 distance adjustment bar
10 chair fixing base profile
11 chair base fixing element
12 poles locking chair base
13 pins fixing the rubber protector
14 bar rotation lock
15 profile cap 1
16 profile cap 2
17 profile cap 3
18 profile cap 4
19 cylinder fixture 1
20 cylinder fixture 2
21 no. 1 cylinder
22 no. 2 cylinder
23 no. 3 cylinder
24 no. 4 cylinder
25 cylinder rod extension
26 control panel
28 threaded bushing
29 wheels of the chair base fixing element
30 cylinder fixing block
31 racing chair welded base
32 wheels of the racing chair fixing base
33 chair fixing base profile - racing chair variant.

## Claims

1. An automated car game simulator including:
- a steering wheel fixing base (1) with a control panel (26) and a pedal fixing base (2), connected together by a frame including the top frame (3), the bottom frame (4) and the bottom frame profile (5);
- height adjustment profile (6), wherein the top frame (3) is partially inserted into the closed height adjustment profile (6), while the bottom frame (4) is connected to the closed height adjustment profile (6);
- distance adjustment bar adjusting the distance of the chair from the pedal fixing base (2), wherein the distance adjustment bar (9) is provided through with a through opening, wherein the chair fixing base profile (10, 33) is inserted into the distance adjustment bar (9);
- a control system;
**characterized in that** it further comprises
- two flattened pipes (7) attached to the top frame (3), wherein the first stationary flattened pipe (7) is fixed, while the second mobile flattened pipe (7) is connected detachably, using longitudinal openings provided in the top frame (3), and the steering wheel fixing base (1) is attached on the second flattened pipe, and both flattened pipes (7), the first fixed and the second mobile pipes are connected by two no. 1 cylinders (21) using cylinder fixtures (19), thanks to which motion of the cylinder (21) ensures mobility of the steering wheel fixing base (1) within the length of the longitudinal openings;
- two flattened pipes (8), bottom and top pipe, wherein the bottom flattened pipe (8) is installed on the closed height adjustment profile (6), and the top flattened pipe (8) is installed on the top frame (1) and two no. 2 cylinders (22) are installed to both flattened pipes (8), the bottom and the top pipe, using cylinder fixtures (19), wherein motions of no. 2 cylinders (22) ensure mobility and thus partial protrusion of the top frame (3) from the closed height adjustment profile (6), ensuring height adjustment of the steering wheel fixing base (1);
- the distance adjustment bar (9) is provided with a through opening, through which the third flattened pipe (7) is inserted, which is installed on both sides on the bottom frame profile (5), wherein the pedal fixing base (2) is installed on the third flattened pipe (7), and a bar rotation lock (14) is inserted into the space between the distance adjustment bar (9) and the third flattened pipe (7), at the flattening, which enables the fixing of any raid pedals and angle adjustment;
wherein the bottom frame (4) and the pedal fixing base (2) are connected through the fourth flattened pipe (7), to which the pedal fixing base (2) is attached at one side, and the bottom frame (4) on the other side, using longitudinal openings which ensure adjustment of the pedal fixing base (2), wherein bottom parts of two no. 3 cylinders (23) are attached to the fourth flattened pipe (7) using a cylinder fixture (20), while the top parts of no. 3 cylinders (23) are attached using a cylinder fixture (19) to the bottom flattened pipe (8) attached to the closed height adjustment profiles (6) and motions of the cylinders enable the angle adjustment of the pedal fixing base (2),
wherein both said elements, the chair fixing base profile (10, 33) and the distance adjustment bar (9) are connected to a no. 4 cylinder (24) and the motion of the no. 4 cylinder (24) causes extension or retraction of the chair fixing base profile (10, 33) from or to the distance adjustment bar (9) and thus adjustment of the distance between the chair and the steering wheel and the pedals; and
- the control system, in which
- a radio receiver is connected to an AC/DC converter and to direction controllers 1-4, wherein the direction controller 1 is connected to 1/1 and 1/2 motors which are responsible for the setting the steering wheel position, the direction controller 2 is connected to 2/1 and 2/2 motors, which are responsible for the height of the steering wheel fixing base, the direction controller 3 is connected to motors 3/1 and 3/2, which are responsible for setting the pedal fixing base angle, while the direction controller 4 is connected to the 4/1 motor, responsible for chair protrusion in relation to the steering wheel and the pedals;
- the radio receiver is connected to a battery providing power supply, whether switching on/off is possible thanks to the switch S1, the radio receiver is then connected to switches S2-S13, wherein switches S2 and S3 enable, respectively, extension and retraction of the steering wheel fixing base adjustment cylinders, the S4 and S5 switches enable, respectively, lifting and lowering the steering wheel fixing base adjustment cylinders, the S6 and S7 enable, respectively, lifting and lowering the pedal fixing base adjustment cylinders, the S8 and S9 switches enable, respectively, increasing and decreasing the distance of chair adjustment cylinders in relation to the steering wheel and the pedals, while the S10-S13 switches enable the frame position set using switches S2-S9 to be stored, as well as enable such positions to be loaded and set automatically by the cylinders, wherein
- the radio receiver and the radio transmitter are connected using wireless communication.

2. The automated simulator according to claim 1, **characterised in that** the chair fixing base profile (10) is attached, in a detachable manner, to the chair base fixing element (11), wherein the chair base fixing element (11) has three arms, the first of which is attached in a detachable manner to the chair fixing base profile (10), while the other two arms are offset against the first arm by the angle of 144°, such that the offset second and third arms form an angle of 72°,
each of the three arms has one longitudinal opening, through which the pole locking the chair base (12) is attached, and which enables the adjustment of poles locking the chair base (12) within the length of the longitudinal openings and such a placement of poles (12), which makes it possible to place and attach a 5-arm base of a standard office chair,
wherein motion of the chair fixing base profile (10) is possible thanks to three circles of the chair base fixing element (29), which are installed at the bottom in the chair base fixing element (11).

3. The automated simulator according to claim 1, **characterised in that** the chair fixing base profile (33) of a racing chair is attached in a detachable manner to the welded base of a racing chair (31), which is provided at the bottom with at least three wheels of the racing chair fixing base (32), enabling motion of the welded base of a racing chair (31).

4. The automated simulator according to any of the claims 1-3, **characterised in that** the direction controllers 1-4 are provided with terminal sensor inputs and motor overload measurement sensor inputs which ensure that the motors are stopped at their terminal position and during an overload and protect the motors against damage.

## Patentansprüche

1. Automatisierter Auto-Spiel-Simulator, mit:
- einer Lenkradfixierbasis (1) mit einem Bedienfeld (26) und einer Pedalfixierbasis (2), die miteinander durch ein Gestell mit Obergestell (3), Untergestell (4) und Untergestellprofil (5) verbunden sind;
- einem Höheneinstellprofil (6), wobei das Obergestell (3) in das geschlossene Höheneinstellprofil (6) teilweise eingesetzt ist, während das Untergestell (4) mit dem geschlossenen Höheneinstellprofil (6) verbunden ist;
- einer Abstandseinstellstange, die den Abstand des Sitzes von der Pedalfixierbasis (2) einstellt, wobei die Abstandseinstellstange (9) mit einer Durchgangsöffnung versehen ist, wobei das Sitzfixierbasisprofil (10, 33) in die Abstandseinstellstange (9) eingesetzt ist;
- einem Steuersystem;
**dadurch gekennzeichnet, dass** er ferner aufweist
- zwei abgeflachte Rohre (7), die an dem Obergestell (3) befestigt sind, wobei das erste, stationäre, abgeflachte Rohr (7) fest angebracht ist, während das zweite, bewegliche, abgeflachte Rohr (7) lösbar verbunden ist, mittels im Obergestell (3) vorgesehener Langlöcher, und die Lenkradfixierbasis (1) an dem zweiten abgeflachten Rohr befestigt ist, und beide abgeflachten Rohre (7), das erste feste und das zweite bewegliche Rohr, durch zwei erste Zylinder (21) mittels Zylinderhalterungen (19) verbunden sind, aufgrund dessen ein Bewegen des Zylinders (21) für Beweglichkeit der Lenkradfixierbasis (1) innerhalb der Länge der Langlöcher sorgt;
- zwei abgeflachte Rohre (8), ein unteres und ein oberes Rohr, wobei das untere abgeflachte Rohr (8) auf dem geschlossenen Höheneinstellprofil (6) montiert ist und das obere abgeflachte Rohr (8) auf dem Obergestell (1) montiert ist und zwei zweite Zylinder (22) auf beiden abgeflachten Rohren (8), dem unteren und dem oberen Rohr, mittels Zylinderhalterungen (19) montiert sind, wobei Bewegungen der Zylinder (22) für Beweglichkeit des Obergestells (3) und somit dessen teilweises Hervorragen aus dem geschlossenen Höheneinstellprofil (6) sorgen, wodurch die Höheneinstellung der Lenkradfixierbasis (1) erbracht wird;
- die Abstandseinstellstange (9) mit einer Durchgangsöffnung versehen ist, durch die das dritte abgeflachte Rohr (7) eingeführt ist, das beidseitig am Untergestellprofil (5) montiert ist, wobei die Pedalfixierbasis (2) auf dem dritten abgeflachten Rohr (7) montiert ist, und eine Stangendrehsicherung (14) in den Raum zwischen der Abstandseinstellstange (9) und dem dritten abgeflachten Rohr (7) an der Abflachung eingesetzt ist, wodurch die Befestigung jeglicher Rallye-Pedale und Winkelverstellung erbracht wird;
wobei das Untergestell (4) und die Pedalfixierbasis (2) über das vierte abgeflachte Rohr (7) verbunden sind, an dem die Pedalfixierbasis (2) auf einer Seite und das Untergestell (4) auf der anderen Seite befestigt ist, mithilfe von Langlöchern, die ein Einstellen der Pedalfixierbasis (2) erbringen, wobei Unterteile von zwei dritten Zylindern (23) an dem vierten abgeflachten Rohr (7) mittels einer Zylinderhalterung (20) angebracht sind, während die oberen Teile der dritten Zylinder (23) mittels einer Zylinderhalterung (19) an dem unteren abgeflachten Rohr (8) angebracht sind, das an den geschlossenen Höheneinstellprofilen (6) angebracht ist, und Bewegungen der Zylinder die Winkeleinstellung der Pedalfixierbasis (2) ermöglichen,
wobei beide genannten Elemente, das Sitzfixierbasisprofil (10, 33) und die Abstandseinstellstange (9), mit einem vierten Zylinder (24) verbunden sind, und die Bewegung des vierten Zylinders das Ausstrecken oder Einziehen des Sitzfixierbasisprofils (10, 33) von bzw. zu der Abstandseinstellstange (9) und damit das Einstellen des Abstands zwischen dem Sitz und dem Lenkrad und den Pedalen bewirkt; und
- das Steuersystem, worin
- ein Funkempfänger mit einem Gleichrichterwandler und mit Richtungsreglern 1-4 verbunden ist, wobei der Richtungsregler 1 mit Motoren 1/1 und 1/2 verbunden ist, die für das Einstellen der Lenkradposition zuständig sind, der Richtungsregler 2 mit Motoren 2/1 und 2/2 verbunden ist, die für die Höhe der Lenkradfixierbasis zuständig sind, der Richtungsregler 3 mit Motoren 3/1 und 3/2 verbunden ist, die für das Einstellen des Winkels der Pedalfixierbasis zuständig sind, während der Richtungsregler 4 mit dem Motor 4/1 verbunden ist, der für das Vorragen des Sitzes in Bezug auf das Lenkrad und die Pedale zuständig ist;
- der Funkempfänger mit einer Batterie für die Stromversorgung verbunden ist, wobei aufgrund des Schalters S1 Ein-/Ausschalten möglich ist, der Funkempfänger dann mit Schaltern S2-S13 verbunden ist, wobei die Schalter S2 und S3 das Ausstrecken bzw. Einziehen der Einstellzylinder der Lenkradfixierbasis ermöglichen, die Schalter S4 und S5 das Anheben bzw. Absenken der Einstellzylinder der Lenkradfixierbasis ermöglichen, die Schalter S6 und S7 das Anheben bzw. Absenken der Einstellzylinder der Pedalfixierbasis ermöglichen, die Schalter S8 und S9 das Vergrößern bzw. Verkleinern des Abstands der Sitzeinstellzylinder in Bezug auf das Lenkrad und die Pedale ermöglichen, während die Schalter S10-S13 das Speichern der mit den Schaltern S2-S9 eingestellten Position des Gestells sowie das Laden und automatische Einstellen solcher Positionen durch die Zylinder ermöglichen, wobei
- der Funkempfänger und der Funksender über drahtlose Kommunikation verbunden sind.

2. Automatisierter Simulator nach Anspruch 1, **dadurch gekennzeichnet, dass** das Sitzfixierbasisprofil (10) an dem Sitzbasisfixierelement (11) lösbar befestigt ist, wobei das Sitzbasisfixierelement (11) drei Arme aufweist, von denen der erste an dem Sitzfixierbasisprofil (10) lösbar befestigt ist, während die beiden anderen Arme gegenüber dem ersten Arm um einen Winkel von 144° versetzt sind, so dass der so versetzte zweite und dritte Arm einen Winkel von 72° bilden,
jeder der drei Arme ein Langloch hat, durch die eine die Sitzbasis (12) verriegelnde Stange befestigt ist und die das Einstellen der die Sitzbasis (12) verriegelnden Stangen innerhalb der Länge der Langlöcher und eine solche Anordnung der Stangen (12) ermöglicht, was ermöglicht, ein fünfarmiges Fußkreuz eines Standard-Bürositzes zu positionieren und zu befestigen,
wobei die Bewegung des Sitzfixierprofils (10) aufgrund dreier Kreise des Sitzbasisfixierelements (29) möglich ist, die am Boden in das Sitzbasisfixierelement (11) montiert sind.

3. Automatisierter Simulator nach Anspruch 1, **dadurch gekennzeichnet, dass** das Sitzfixierbasisprofil (33) eines Rennsitzes an der geschweißten Basis eines Rennsitzes (31) lösbar angebracht ist, die am Boden mit zumindest drei Rädern der Sitzfixierbasis des Rennsitzes (32) ausgestattet ist, was eine Bewegung der geschweißten Basis eines Rennsitzes (31) ermöglicht.

4. Automatisierter Simulator nach einem der Ansprüche 1 bis 3, **dadurch gekennzeichnet, dass** die Richtungsregler 1-4 mit Endlage-Sensoreingängen und Motorüberlastmessungs-Sensoreingängen versehen sind, die dafür sorgen, dass die Motoren in ihrer Endlage und bei Überlast angehalten werden und die Motoren vor Beschädigung schützen.

## Revendications

1. Simulateur de jeu de voiture automatisé incluant :
- une base de fixation de volant (1) avec un panneau de commande (26) et une base de fixation de pédales (2), reliées ensemble par un châssis incluant le châssis supérieur (3), le châssis inférieur (4) et le profilé de châssis inférieur (5) ;
- un profilé d'ajustement de hauteur (6), où le châssis supérieur (3) est partiellement inséré dans le profilé d'ajustement de hauteur (6) fermé, tandis que le châssis inférieur (4) est relié au profilé d'ajustement de hauteur (6) fermé ;
- une barre d'ajustement de distance ajustant la distance entre le siège et la base de fixation de pédales (2), où la barre d'ajustement de distance (9) est pourvue d'une ouverture traversante, où le profilé de base de fixation de siège (10, 33) est inséré dans la barre d'ajustement de distance (9) ;
- un système de commande ;
**caractérisé en ce qu'**il comprend en outre
- deux tuyaux aplatis (7) attachés au châssis supérieur (3), où est fixé le premier tuyau aplati immobile (7), tandis que le deuxième tuyau aplati mobile (7) est relié de manière détachable, à l'aide d'ouvertures longitudinales prévues dans le châssis supérieur (3), et la base de fixation de volant (1) est attachée sur le deuxième tuyau aplati, et les deux tuyaux aplatis (7), le premier tuyau fixe et le deuxième tuyau mobile sont reliés par deux cylindres n°1 (21) à l'aide de pièces de fixation de cylindre (19), grâce auxquelles le mouvement du cylindre (21) garantit la mobilité de la base de fixation de volant (1) dans les limites de la longueur des ouvertures longitudinales ;
- deux tuyaux aplatis (8), un tuyau inférieur et un tuyau supérieur, où le tuyau aplati inférieur (8) est installé sur le profilé d'ajustement de hauteur (6) fermé, et le tuyau aplati supérieur (8) est installé sur le châssis supérieur (1) et deux cylindres n°2 (22) sont installés sur les deux tuyaux aplatis (8), le tuyau inférieur et le tuyau supérieur, à l'aide de pièces de fixation de cylindre (19), où les mouvements des cylindres n°2 (22) garantissent la mobilité et ainsi la saillie partielle du châssis supérieur (3) du profilé d'ajustement de hauteur (6) fermé, garantissant l'ajustement de hauteur de la base de fixation de volant (1) ;
- la barre d'ajustement de distance (9) est pourvue d'une ouverture traversante, à travers laquelle est inséré le troisième tuyau aplati (7), qui est installé des deux côtés du profilé de châssis inférieur (5), où la base de fixation de pédales (2) est installée sur le troisième tuyau aplati (7), et un dispositif de blocage de rotation de barre (14) est inséré dans l'espace entre la barre d'ajustement de distance (9) et le troisième tuyau aplati (7), au niveau de l'aplatissement, ce qui permet la fixation de n'importe quelle pédale de raid et l'ajustement d'angle ;
où le châssis inférieur (4) et la base de fixation de pédales (2) sont reliés par le quatrième tuyau aplati (7), auquel la base de fixation de pédales (2) est attachée d'un côté, et le châssis inférieur (4) de l'autre côté, à l'aide d'ouvertures longitudinales qui garantissent l'ajustement de la base de fixation de pédales (2), où les parties inférieures de deux cylindres n°3 (23) sont attachées au quatrième tuyau aplati (7) à l'aide d'une pièce de fixation de cylindre (20), tandis que les parties supérieures des cylindres n°3 (23) sont attachées à l'aide d'une pièce de fixation de cylindre (19) au tuyau aplati inférieur (8) attaché aux profilés d'ajustement de hauteur (6) fermés et les mouvements des cylindres permettent l'ajustement d'angle de la base de fixation de pédales (2),
où lesdits deux éléments, le profilé de base de fixation de siège (10, 33) et la barre d'ajustement de distance (9) sont reliés à un cylindre n°4 (24) et le mouvement du cylindre n°4 (24) provoque l'extension ou la rétraction du profilé de base de fixation de siège (10, 33) depuis ou jusqu'à la barre d'ajustement de distance (9) et ainsi l'ajustement de la distance entre le siège et le volant et les pédales ; et
- le système de commande, dans lequel
- un récepteur radio est relié à un convertisseur CA/CC et à des dispositifs de commande de direction 1 à 4, où le dispositif de commande de direction 1 est relié à des moteurs 1/1 et 1/2 qui sont responsables du réglage de la position de volant, le dispositif de commande de direction 2 est relié à des moteurs 2/1 et 2/2, qui sont responsables de la hauteur de la base de fixation de volant, le dispositif de commande de direction 3 est relié à des moteurs 3/1 et 3/2, qui sont responsables du réglage de l'angle de la base de fixation de pédales, tandis que le dispositif de commande de direction 4 est relié au moteur 4/1, responsable de la saillie de siège par rapport au volant et aux pédales ;
- le récepteur radio est relié à une batterie fournissant une alimentation en énergie, si la commutation marche/arrêt est possible grâce au commutateur S1, le récepteur radio est alors relié aux commutateurs S2 à S13, où les commutateurs S2 et S3 permettent, respectivement, l'extension et la rétraction des cylindres d'ajustement de la base de fixation de volant, les commutateurs S4 et S5 permettent, respectivement, le levage et l'abaissement des cylindres d'ajustement de la base de fixation de volant, les commutateurs S6 et S7 permettent, respectivement, le levage et l'abaissement des cylindres d'ajustement de la base de fixation de pédales, les commutateurs S8 et S9 permettent, respectivement, l'augmentation et la diminution de la distance entre des cylindres d'ajustement de siège et le volant et les pédales, tandis que les commutateurs S10 à S13 permettent de mémoriser la position de châssis réglée à l'aide des commutateurs S2 à S9, et permettent de charger et de régler automatiquement de telles positions par les cylindres, où
- le récepteur radio et l'émetteur radio sont reliés à l'aide d'une communication sans fil.

2. Simulateur automatisé selon la revendication 1, **caractérisé en ce que** le profilé de base de fixation de siège (10) est attaché, de manière détachable, à l'élément de fixation de base de siège (11), où l'élément de fixation de base de siège (11) présente trois bras, dont le premier est attaché de manière détachable au profilé de base de fixation de siège (10), tandis que les deux autres bras sont décalés par rapport au premier bras selon l'angle de 144°, de telle sorte que les deuxième et troisième bras décalés forment un angle de 72°,
chacun des trois bras présente une ouverture longitudinale, à travers laquelle est attaché le tube bloquant la base de siège (12), et qui permet l'ajustement de tubes bloquant la base de siège (12) dans les limites de la longueur des ouvertures longitudinales et un tel placement des tubes (12), ce qui permet de placer et d'attacher une base à 5 bras d'un siège de bureau standard,
où le mouvement du profilé de base de fixation de siège (10) est possible grâce à trois pièces sphériques de l'élément de fixation de base de siège (29), qui sont installées dans la partie inférieure de l'élément de fixation de base de siège (11).

3. Simulateur automatisé selon la revendication 1, **caractérisé en ce que** le profilé de base de fixation de siège (33) d'un siège de course est attaché de manière détachable à la base soudée d'un siège de course (31), qui est pourvu au niveau de la partie inférieure d'au moins trois roulettes de la base de fixation de siège de course (32), permettant le mouvement de la base soudée d'un siège de course (31).

4. Simulateur automatisé selon n'importe laquelle des revendications 1 à 3, **caractérisé en ce que** les dispositifs de commande de direction 1 à 4 sont pourvus d'entrées de capteur terminal et d'entrées de capteur de mesure de surcharge de moteur qui garantissent que les moteurs sont arrêtés dans leur position terminale et pendant une surcharge et qui protègent les moteurs contre un dommage.
